# EUROPÄISCHE PATENTSCHRIFT

(11) **EP 2 456 542 B1**
(45) Veröffentlichungstag und Bekanntmachung des Hinweises auf die Patenterteilung: **28.01.2015**
(21) Anmeldenummer: 10741892.3
(22) Anmeldetag: 24.06.2010
(51) Int. Cl.: C02F 9/00, B01D 53/14, B01D 53/38, B01D 53/75

(54) **VERFAHREN UND VORRICHTUNG ZUR KOMBINIERTEN PHYSIKALISCH / CHEMISCHEN ABLUFTREINIGUNG, ABWASSERREINIGUNG, TRINKWASSER-DESINFEKTION SOWIE ZUR GLEICHZEITIGEN ABLUFT- UND ABWASSERBEHANDLUNG**
METHOD AND DEVICE FOR THE COMBINED PHYSICAL/CHEMICAL PURIFICATION OF EXHAUST AIR, PURIFICATION OF WASTE WATER, AND DISINFECTION OF POTABLE WATER, AND FOR THE SIMULTANEOUS TREATMENT OF EXHAUST AIR AND WASTE WATER
PROCÉDÉ ET DISPOSITIF D'ÉPURATION D'AIR D'ÉCHAPPEMENT, D'ÉPURATION D'EAU USÉE, DE DÉSINFECTION D'EAU POTABLE, AINSI QUE DE TRAITEMENT SIMULTANÉ D'AIR D'ÉCHAPPEMENT ET D'EAU USÉE PHYSICO-CHIMIQUES COMBINÉS

(30) Priorität: 24.06.2009 DE 102009030487
(43) Veröffentlichungstag der Anmeldung: 30.05.2012
(73) Patentinhaber: Shadiakhy, Abdol Hossein, 50259 Pulheim (DE)
(72) Erfinder: SHADIAKHY, Abdol, Hossein, 50259 Pulheim (DE); BÄTGE, Wolfgang, 50827 Köln (DE)
(74) Vertreter: Kiani, Nassim
(86) Internationale Anmeldenummer: PCT/DE2010/000723
(87) Internationale Veröffentlichungsnummer: WO 2010/149147

(56) Entgegenhaltungen:
- EP-A2- 0 242 941
- EP-A2- 0 620 037
- DE-A1- 3 210 516
- US-A1- 2003 106 855
- US-B1- 6 280 696

## Beschreibung

Die vorliegende Erfindung betrifft ein Verfahren und eine Vorrichtung zur kombinierten physikalisch / chemischen Abluftreinigung, Abwasserreinigung, Trinkwasser-Desinfektion sowie zur gleichzeitigen Abluft- und Abwasserbehandlung.

Bekannt sind Anlagen zur Trinkwasser-Desinfektion und auch zur Abwasserreinigung - etwa aus der US 2003/0106855 A1 - vermittels Ozonbehandlung. Ebenso sind auch physikalisch/chemische Abluftreinigungsanlagen, etwa auf chemischem Wege, z.B. durch Waschung mittels einer basischen Lösung oder auch physikalisch durch Aktivkohlefilter, wie etwa aus der EP 0 620 037 A2 bekannt.

Diese offenbart eine Vorrichtung zur physikalisch-chemischen Abluftreinigung, mit einer Kolonne mit drei übereinander angeordneten, miteinander verbundenen Zonen, wobei die beiden unteren Zonen im Gegenstrom von Gas und Waschflüssigkeit betrieben werden. Die zuunterst angeordnete erste Zone weist einen Einlass für Abluft und Ozon auf und dient der Oxidation von in der Abluft und im Waschwasser enthaltenen Schadstoffen, Die darüber angeordnete zweite Zone dient der Waschung der aus der ersten Zone aufsteigenden Abluft, wozu ein mit einer Pumpe betriebener Umwälzkreislauf einen Teil des sich im unteren Bereich der ersten Zone sammelnde Waschwassers im oberen Bereich der zweiten Zone versprüht und so den Gegenstrom von Waschflüssigkeit und aufsteigender Abluft bewirkt. Die über der zweiten Zone angeordnete dritte Zone dient der Rest-Ozon-Vernichtung in der Abluft und eventuell mitgeführtem Waschwasser und der Filtrierung und weist hierzu einen Aktivkohlefilter auf. Über der dritten Zone ist ein Tropfenabscheider angeordnet.

Ein Nachteil solcher Anlagen liegt jedoch darin begründet, daß jeweils eine Anlage für den jeweiligen Zweck benötigt wird, also eine Ozon-Reinigungsanlage für Abluft, eine weitere zur Abwasserreinigung und wiederum eine weitere zur Trinkwasser-Desinfektion, was zu erheblichen Kosten führt.

Angesichts dieses Standes der Technik ist es Aufgabe der vorliegenden Erfindung eine Vorrichtung und Verfahren zur kombinierten physikalisch/chemischen Abluft- und Abwasserreinigung sowie Trinkwasser-Desinfektion anzugeben.

Diese Aufgabe wird erfindungsgemäß durch eine Vorrichtung nach Anspruch 1 sowie Verfahren nach den Ansprüchen 8, 10, 12 und 14 gelöst. Vorteilhafte Ausführungsformen der Erfindung ergeben sich aus den Unteransprüchen.

In der Vorrichtung nach der vorliegenden Erfindung können - etwa vermittels der erfindungsgemäßen Verfahren - somit vier Medien behandelt werden, und zwar
- Abluft,
- Abwasser,
- Rohwasser zu Trinkwasser, sowie
- Abluft und Abwasser gleichzeitig,
was nach dem Stand der Technik bislang so nicht möglich war und infolge dieser vielseitigen Verwendbarkeit gegenüber den jeweiligen Einzelanlagen zu erheblichen Einsparungen führen kann.

Im folgenden wird zur näheren Erläuterung der Erfindung ein nicht einschränkend zu verstehendes Ausführungsbeispiel.anhand der Zeichnung besprochen. In dieser zeigt:

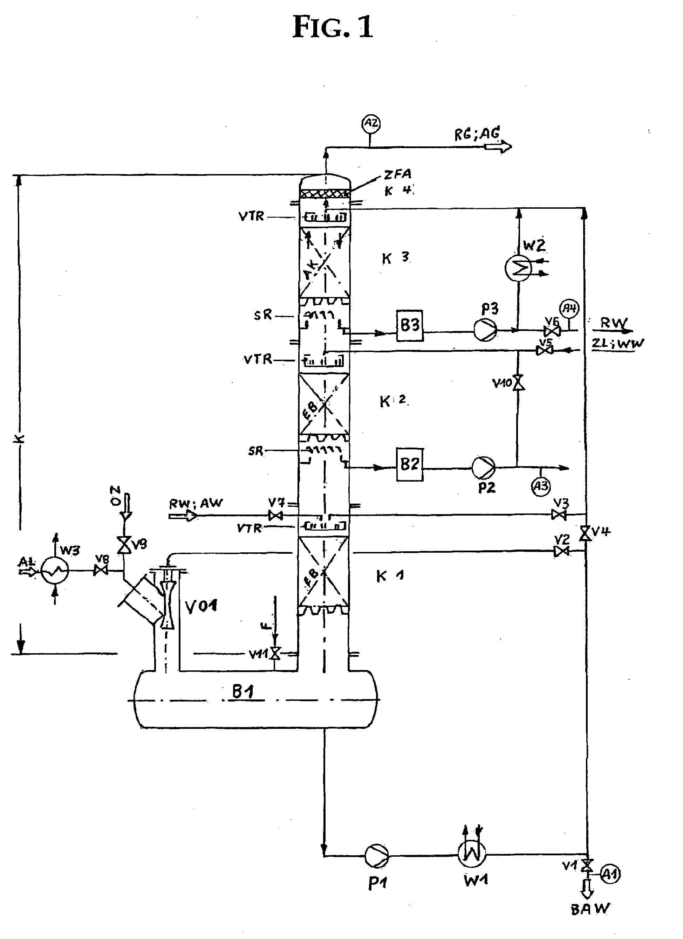

Fig.**1** eine erfindungsgemäße Vorrichtung in schematischer Darstellung.

In der erfindungsgemäßen Vorrichtung nach Fig.**1** wird mittels eines Strahlgasventilators (**VO1**) Abgas (Abluft)/ Ozon angesaugt, wobei der Strahlgasventilators (**VO1**) durch die umgewälzte Flüssigkeit über Pumpe (**P1**) angetrieben wird.

Eine hier dargestellte Kolonne (K**)** weist vier Zonen (**K1 - K4**) auf, und zwar
- eine erste Zone (**K1**), die der Oxidation (Chemische Behandlung mit Ozon 03) dient,
- eine zweite Zone (**K2**), die der Waschung (Physikalische, Chemische Behandlung mit Wasser H₂O und Lauge NaOH) dient,
- eine dritte Zone (**K3**) zur Rest-Ozonvernichtung und Filtrierung (mit Aktivkohle), sowie
- eine vierten Zone (**K4**) zur Abscheidung etwaiger mitgerissener Flüssigkeitstropfen vom Gas vermittels etwa eines Zentrifugalabscheiders bzw. Demisters,
wobei die Kolonne (**K**) in den vorgenannten Zonen (**K1 - K3**) im Gegenstrom von Gas und Waschflüssigkeit betrieben wird.

Je nach den vier erfindungsgemäß angestrebten Betriebsfällen wird die Anlage entsprechend geschaltet (siehe hierzu nachfolgende Verfahrenbeschreibungen A - D).

Im Gasaustrittsteil, also der vierten Zone (**K4**) befindet sich ein Zentrifugalabscheider bzw. Demister, in der die mitgerissenen Flüssigkeitstropfen aus dem Gas abgeschieden werden.

Zur Abführung der Reaktions- bzw. Lösungswärme befinden sich in den Kreisläufen die Kühler (**W1**) und (**W2**).

Die einzelnen Zonen (**K1**), (**K2**) und (**K3**) werden je nach notwendigem bzw. erforderlichem Stoffaustausch durch Einbauten (z.B. Boden bzw. Böden, Füllkörperpackung(en) oder geordnete Pakkung(en)) ausgerüstet.

Das Abwasser wird auf die erste Zone (**K1**) aufgegeben. Die Ozonzufuhr geschieht durch einen Strahlgasventilator (**VO1**). Die Zirkulation des Wassers erfolgt dort mittels einer Pumpe (P1). Die Ozonmenge bzw. Konzentration richtet sich nach den Verunreinigungen in der Abluft, im Abwasser, bzw. im Rohwasser.

In der zweiten Zone (**K2**) erfolgt eine physikalische Behandlung des Abgases bzw. Abwassers im Gegenstrom (Fälle A und D der nachfolgenden Verfahrensbeschreibungen).

In der dritten Zone (**K3**) wird über eine hochwirksame Aktivkohlefüllung der Restozongehalt der Abluft vernichtet und die entstandene Reaktionswärme mittels eines Flüssigkeitskreislaufs über einen außen liegenden Kühler (**W2**) abgeführt.

Reingas, Reinwasser und behandeltes Abwasser werden in Analysestellen (**A2, A4, A1**) analytisch kontrolliert, um den Anlagenbetrieb der Zonen einzustellen und die Ozondosierung zu optimieren. Vorzugsweise wird (heiße) Abluft vor dem Eintritt in die erfindungsgemäße Vorrichtung mittels eines Kühler (**W3**) abgekühlt

Aus Reinigungsgründen ist die Anlage vorzugsweise spalt- und totraumfrei sowie als CIP (feststehender Begriff: Cleaning In Place) und in GMP (feststehender Begriff: Good Manufacturing Practice ausgeführt).

Nachfolgend soll nun vor diesem Hintergrund eine Beschreibung der vier erfindungsgemäßen Verfahrensvarianten erfolgen, die sich vermittels der erfindungsgemäßen Vorrichtung ausführen lassen:

### Verfahrensvariante A) - Abluftreinigung

Vorzugsweise geschieht zunächst (initial) folgendes: Der Vorlage Behälter für die erste Zone (**B1**) wird über Ventil (**V11**) und der Vorlage Behälter für die dritte Zone (**B3**) über ein Ventil (**V4**) mit Wasser gefüllt. Der Vorlage Behälter für die zweite Zone (**B2**) wird über ein hierfür vorgesehenes weiteres Ventil (**V5**) mit Lauge, etwa Natronlauge, gefüllt.

Die Umwälzkreislaufe der ersten (**K1**), der zweiten (**K2**) und der dritten Zone (**K3**) werden über die ihnen jeweilig zugehörigen Pumpen (**P1**), (**P2**) und (**P3**) in Betrieb genommen.

Der Strahlgasventilator (**VO1**) tritt (jetzt) in Funktion und saugt Abluft über ein Ventil (**V8**) und Ozon über Ventil (**V9**) an.

Es findet eine Oxidation mit Ozon in der ersten Zone (**K1**) der Kolonne (**K**) sowie im zugehörigen Vorlagebehälter (**B1**) satt.

Die Abluft strömt weiter in die zweite Zone (**K2**) der Kolonne (**K**), wo eine physikalisch-, chemische Waschung der Abluft stattfindet.

Die entstandene Reaktionswärme wird vorzugsweise jeweils über individuelle, gekühlte Wärmetauscher (**W1, W2**) abgeführt

In der dritten Zone (**K3**) der Kolonne (**K**) wird die gereinigte Abluft dann über die Aktivkohlefilter von Restozon befreit.

Die gereinigte Abluft wird alsdann in der vierten Zone (**K4**) der Kolonne (**K**) von eventuell mitgerissenen Wassertopfen befreit und über den Kolonnenkopf in die Atmosphäre abgeleitet.

Eine Überwachung und/oder etwaige Steuerung und/oder Regelung der Anlage erfolgt vorzugsweise vermittels von Messungen an Analysenstellen (**A1, A2, A3, A4**).

### Verfahrensvariante B) - Abwasserreinigung

Vorzugsweise geschieht zunächst (initial) folgendes: Der Vorlage Behälter für die erste Zone (**B1**) wird über Ventil (**V11**) und der Vorlage Behälter für die dritte Zone (**B3**) über ein Ventil (**V4**) mit Wasser gefüllt.

Die Umwälzkreislaufe der ersten (**K1**) und der dritten Zone (**K3**) werden über die ihnen jeweilig zugehörigen Pumpen (**P1**) und (**P3**) in Betrieb genommen.

Die Waschzone, also die zweite Zone (**K2**) der Kolonne (**K**) bleibt in dieser Verfahrensvariante hier außer Betrieb.

Der Strahlgasventilator (**V01**) tritt (jetzt) in Funktion und saugt Ozon über ein Ventil (**V9**) an.

Das Abwasser wird über Ventil (**V7**) der ersten Zone (**K1**) der Kolonne (**K**) zugeführt.

Die Oxidation (des Abwassers) mit dem Ozon findet in der ersten Zone (**K1**) der Kolonne (**K**) sowie im Vorlagebehälter für die erste Zone (**B1**) statt.

In der dritten Zone (**K3**) der Kolonne (**K**) wird das Restgas über Aktivkohlefilter vom Restozon befreit.

Die entstandene Reaktionswärme wird vorzugsweise jeweils über individuelle, gekühlte Wärmetauscher (**W1, W2**) abgeführt

In der vierten Zone (**K4**) wird das ozonfreie Restgas von eventuell mitgerissenen Wassertopfen befreit und über den Kolonnenkopf in die Atmosphäre abgeleitet.

Das gereinigte Abwasser verlässt die erfindungsgemäße Vorrichtung über ein Ventil (**V1**).

Eine Überwachung (und auch eine etwaige Regelung und/oder Steuerung) der Vorrichtung erfolgt vorzugsweise über die Analysenstellen (**A1, A2**).

### Verfahrensvariante C) - Rohwasserbehandlung zu Trinkwasser

Vorzugsweise geschieht zunächst (initial) folgendes: Der Vorlage Behälter für die erste Zone (**B1**) wird über Ventil (**V11**) und der Vorlage Behälter für die dritte Zone (**B3**) über ein Ventil (**V4**) mit Wasser gefüllt.

Die Umwälzkreislaufe der ersten (**K1**) und der dritten Zone (**K3**) werden über die ihnen jeweilig zugehörigen Pumpen (**P1**) und (**P3**) in Betrieb genommen.

Die Waschzone, also die zweite Zone (**K2**) der Kolonne (**K**) bleibt auch im Falle dieser Verfahrensvariante außer Betrieb.

Der Strahlgasventilator (**VO1**) tritt (jetzt) in Funktion und saugt Ozon über ein Ventil (**V9**) an.

Das Rohwasser wird über ein weiteres Ventil (**V7**) der ersten Zone (**K1**) zugeführt.

Die Desinfektion und Oxidation (des Rohwassers) mit Ozon findet in der ersten Zone (**K1**) sowie im zugehörigen Vorlagebehälter (**B1**) statt.

Das behandelte Wasser wird über das Ventil (**V4**), das hierbei als Verbindungsventil fungiert, zur dritten Zone (**K3**) der Kolonne (**K**) geführt, wo es über Aktivkohlefilter geleitet wird, um es vom Restozon zu befreien.

Die entstandene Reaktionswärme wird vorzugsweise jeweils über individuelle, gekühlte Wärmetauscher (**W1, W2**) abgeführt

Das Reinwasser verlässt die erfindungsgemäße Vorrichtung über ein hierfür vorgesehenes Ventil (**V6**).

In der vierten Zone (**K4**) der Kolonne (**K**) wird das ozonfreie Restgas von eventuell mitgerissenen Wassertopfen befreit und über den Kolonnenkopf in die Atmosphäre abgeleitet.

Eine Überwachung der erfidnungsgemäßen Vorrichtung erfolgt in dieser Verfahrensvariante vorzugsweise über die Analysenstelle (**A1, A2, A4**).

### Verfahrensvariante D) - Gleichzeitige Abluft- und Abwasserbehandlung (unter bestimmten Voraussetzungen d.h. bei gleichzeitigem Vorhandensein von Abwasser und Abluft)

Vorzugsweise geschieht zunächst (initial) folgendes: Der Vorlage Behälter für die erste Zone (**B1**) wird über Ventil (**V11**) und der Vorlage Behälter für die dritte Zone (**B3**) über ein Ventil (**V4**) mit Wasser gefüllt. Der Vorlage Behälter für die zweite Zone (**B2**) wird über ein hierfür vorgesehenes weiteres Ventil (**V5**) mit Lauge, etwa Natronlauge, gefüllt.

Die Umwälzkreislaufe der ersten (**K1**), der zweiten (**K2**) und der dritten Zone (**K3**) werden über die ihnen jeweilig zugehörigen Pumpen (**P1**), (**P2**) und (**P3**) in Betrieb genommen.

Der Strahlgasventilator (**VO1**) tritt (jetzt) in Funktion und saugt Abluft über ein Ventil (**V8**) und Ozon über Ventil (**V9**) an.

Etwaige (zu) heiße Abluft wird vor dem Eintritt in die erfindungsgemäße Vorrichtung mittels eines hierfür vorgesehenen Kühlers (**W3**) abgekühlt.

Das Abwasser wird über ein entsprechendes Ventil (**V7**) der ersten Zone (**K1**) zugeführt.

Die Oxidation (des Abwassers und der Abluft) durch das Ozon findet in der ersten Zone (**K1**) sowie im hierzu gehörigen Vorlagebehälter (**B1**) statt.

Die Abluft strömt weiter in die zweite Zone(**K2**), wo eine physikalisch-, chemische Waschung der Abluft stattfindet.

Die entstandene Reaktionswärme wird vorzugsweise jeweils über individuelle, gekühlte Wärmetauscher (**W1, W2**) abgeführt

Das gereinigte Abwasser verlässt die erfindungsgemäße Vorrichtung über ein hierfür vorgesehenes Ventil (**V1**).

In der dritten Zone (**K3**) wird die gereinigte Abluft über Aktivkohlefilter von Restozon befreit.

Die gereinigte Abluft wird in der vierten Zone (**K4**) von eventuell mitgerissenen Wassertopfen befreit und über den Kolonnenkopf in die Atmosphäre abgeleitet.

Eine Überwachung der erfindungsgemäßen Vorrichtung kann hierbei über Analysenstellen (**A1**, **A2, A3**) erfolgen.

### Bezugszeichenliste

**A1, A2, A3, A4 = Analyse Stellen**
**AG = Abgas**
**AK = Aktivkohle**
**AL = Abluft**
**AW = Abwasser**
**B1, B2, B3 = Behälter**
**BAW = Behandeltes Abwasser**
**EB = Einbauten**
**F = Füllstütze**
**K1 = Kolonnenteil Oxidation**
**K2 = Kolonnenteil Waschung**
**K3 = Kolonnenteil Ozon Vernichter**
**K4 = Kolonnenteil Abscheider**
**OZ = Ozon Zulauf**
**P1, P2, P3 = Pumpen**
**RC = Reingas**
**REW = Rein Wasser**
**RW = Rohwasser**
**SR = Sammler**
**V1, V2, V3, V4, V5, V6, V7, V8, V9, V10, V11 = Ventile**
**VO1 = Strahlgasventilator**
**VTR = Verteiler**
**W1, W2, W3 = Wärmetauscher**
**WW = Waschwasser**
**ZF = Zulauf**

## Patentansprüche

1. Vorrichtung zur kombiniert physikalisch-chemischen Abgas- und Abwasserereinigung sowie Trinkwasser-Desinfektion, mit einer Kolonne (**K**) mit vier miteinander verbundenen Zonen (**K1, K2, K3, K4**), von denen die drei unteren Zonen (**K1, K2, K3**) im Gegenstrom von Gas und Waschflüssigkeit betrieben werden, wobei
die zuunterst angeordnete erste Zone (**K1**) der Oxidation von Abgas und/oder Wasser dient und hierzu
jeweils einen Einlaß für Abgas (**AL**) und Ozon (**OZ**) sowie für zu reinigendes Abwasser (**AW**) oder Rohwasser (**RW**),
einen Strahlgasventilator (**VO1**) zur Ansaugung von Abgas (**AL**) und/oder Ozon (**OZ**), einen Ablauf (**V1**) für gereinigtes Abwasser (**BAW**), und
einen vermittels einer ersten Pumpe (**P1**) betriebenen Umwälzkreislauf durch die erste Zone (K1) sowie einen zugehörigen Vorlage Behälter (**B1**) zur Aufnahme von Wasser aufweist,
wobei der Strahlgasventilator (**VO1**) vermittels einer in dem Umwälzkreislauf der ersten Zone (**K1**) umgewälzten Flüssigkeit angetrieben wird
und so im Umwälzkreislauf der ersten Zone (**K1**) der Kolonne (**K**) eine chemische Behandlung des zu reinigenden Abgases und/oder des zu reinigenden Abwassers und/oder des zu desinfizierenden Rohwassers mit Ozon stattfinden kann;
die darüber angeordnete zweite Zone (**K2**) der Waschung des aus der ersten Zone aufsteigenden Abgases dient und hierzu einen vermittels einer zweiten Pumpe (**P2**) betriebenen Umwälzkreislauf aufweist, dem Waschwasser oder Lauge zugeführt werden kann;
die über der zweiten Zone angeordnete dritte Zone (**K3**) der Rest-Ozon-Vernichtung im Abgas und/oder im Wasser und der Filtrierung dient und hierzu einen Aktivkohlefilter und einen Ablauf (**V6**) für Reinwasser sowie einen vermittels einer dritten Pumpe (**P3**) betriebenen Umwälzkreislauf aufweist; und
die über der dritten Zone angeordnete vierte Zone (K4**),** die der Abscheidung von Wassertropfen aus dem Abgas dient und hierzu einen Zentrifugalabscheider oder einen Demister aufweist,
und ein Kreislaufverbindungsventil (**V4**) vorgesehen ist, um Flüssigkeit aus dem Umwälzkreislauf der ersten Zone (**K1**) in den Umwälzkreislauf der dritten Zone (**K3**) zu leiten.

2. Vorrichtung zur kombiniert physikalisch-chemischen Abgas- und Abwasserereinigung sowie Trinkwasser-Desinfektion nach Anspruch 1, **dadurch gekennzeichnet, daß** der Umwälzkreislauf der ersten Zone (**K1**) auch einen Kühler für die erste Zone (**W1**) aufweist.

3. Vorrichtung zur kombiniert physikalisch-chemischen Abgas- und Abwasserereinigung sowie Trinkwasser-Desinfektion nach Anspruch 1 oder 2, **dadurch gekennzeichnet, daß** der Umwälzkreislauf der zweiten Zone (**K2**) auch einen Vorlage Behälter für die zweite Zone (**B2**) zur Aufnahme von Lauge, vorzugsweise zur Aufnahme von Natronlauge (**NaOH**) aufweist.

4. Vorrichtung zur kombiniert physikalisch-chemischen Abgas- und Abwasserereinigung sowie Trinkwasser-Desinfektion nach einem der Ansprüche 1 bis 3, **dadurch gekennzeichnet, daß** der Umwälzkreislauf der dritten Zone (**K3**) auch einen Vorlage Behälter für die dritte Zone (**B3**) zur Aufnahme von Wasser aufweist.

5. Vorrichtung zur kombiniert physikalisch-chemischen Abgas- und Abwasserereinigung sowie Trinkwasser-Desinfektion nach einem der Ansprüche 1 bis 4, **dadurch gekennzeichnet, daß** der Umwälzkreislauf der dritten Zone (**K3**) auch einen Kühler, vorzugsweise einen gekühlten Wärmetauscher, für die dritte Zone (**W2**) aufweist.

6. Vorrichtung zur kombiniert physikalisch-chemischen Abgas- und Abwasserereinigung sowie Trinkwasser-Desinfektion nach einem der Ansprüche 1 bis 5, **dadurch gekennzeichnet, daß** die Zufuhr für zu reinigendes Abgas auch einen Kühler, vorzugsweise einen gekühlten Wärmetauscher, für das Abgas (**W3**) aufweist.

7. Vorrichtung zur kombiniert physikalisch-chemischen Abgas- und Abwasserereinigung sowie Trinkwasser-Desinfektion nach einem der Ansprüche 1 bis 6, **dadurch gekennzeichnet, daß** der Ablaß für behandeltes Abwasser und der Ablaß für Reinwasser wie auch der Auslaß für Reingas oder Abgas und der Ablauf für Waschwasser oder Lauge jeweils eine Analysestelle (**A1, A2, A3**, **A4**) zur analytischen Kontrolle und Einstellung der Anlagenzonen (**K1, K2, K3, K4**) und zur Optimierung der Ozondosierung aufweist.

8. Verfahren zur Abgasreinigung mittels einer Vorrichtung nach einem der Ansprüche 1 bis 7, bei dem vermittels der Pumpen (**P1, P2, P3**) die Umwälzkreislaufe der ersten (**K1**), zweiten (**K2**) und der dritten Zone (**K3**) betrieben und vermittels des Strahlgasventilators (**VO1**) Abgas und Ozon angesaugt werden, wobei
- das Abgas in der ersten Zone (**K1**) durch das Ozon chemisch behandelt wird, und dann
- weiter in die zweite Zone (**K2**) strömt, wo es physikalisch-/chemisch gewaschen wird, wonach es
- als gereinigtes Abgas in die dritte Zone (**K3**) strömt, um dort durch Aktivkohlefilter vom Restozon befreit zu werden, um schließlich
- in der vierten Zone (**K4**) durch einen Zentrifugalabscheider oder einen Demister von mitgerissenen Wassertropen befreit zu werden, wonach
es über den Kolonnenkopf in die Atmosphäre abgeleitet wird.

9. Verfahren zur Abgasreinigung nach Anspruch 8 mittels einer Vorrichtung nach Anspruch 3, und einem der Ansprüche 4 bis 7, soweit diese auf Anspruch 3 rückbezogen sind, **dadurch gekennzeichnet, daß** zu Beginn des Verfahrens der Vorlage Behälter für die erste Zone (**B1**) mit Wasser und der Vorlage Behälter für die zweite Zone (**B2**) mit Lauge befüllt wird

10. Verfahren zur Abwasserreinigung mittels einer Vorrichtung nach einem der Ansprüche 1 bis 7, bei dem vermittels der Pumpen (**P1, P3**) die Umwälzkreisläufe der ersten (**K1**) und der dritten Zone (**K3**) betrieben, Abwasser dem Umwälzkreislauf der ersten Zone (**K1**) zugeführt und vermittels des Strahlgasventilators (**VO1**) Ozon angesaugt wird , wobei
- das Abwasser in der ersten Zone (**K1**) durch das Ozon chemisch behandelt wird, und so gereinigt die Vorrichtung wieder verläßt, wobei wobei ein Restgas anfällt,
- das Restgas in die dritte Zone (**K3**) strömt, wo es durch Aktivkohlefilter vom Restozon befreit wird, um schließlich
- in der vierten Zone (**K4**) durch einen Zentrifugalabscheider oder einen Demister von mitgerissenen Wassertropen befreit zu werden, wonach
es über den Kolonnenkopf in die Atmosphäre abgeleitet wird.

11. Verfahren zur Abwasserreinigung nach Anspruch 10 mittels einer Vorrichtung nach Anspruch 4 und einem der Ansprüche 5 bis 7, soweit diese auf Anspruch 4 rückbezogen sind, **dadurch gekennzeichnet, daß** zu Beginn des Verfahrens der Vorlage Behälter für die erste Zone (**B1**) mit Wasser und der Vorlage Behälter für die dritte Zone (**B3**) ebenfalls mit Wasser befüllt wird

12. Verfahren zur Trinkwasser-Desinfektion mittels einer Vorrichtung nach einem der Ansprüche 1 bis 7, bei dem vermittels der Pumpen (**P1, P3**) die Umwälzkreisläufe der ersten (**K1**) und der dritten Zone (**K3**) betrieben, Rohwasser dem Umwälzkreislauf der ersten Zone (**K1**) zugeführt und vermittels des Strahlgasventilators (**VO1**) Ozon angesaugt wird , wobei
- das Rohwasser in der ersten Zone (**K1**) durch das Ozon chemisch behandelt und desinfiziert wird wobei ein Restgas anfällt, worauf das Rohwasser
- über das Kreislaufverbindungsventil (**V4**) der dritten Zone (**K3**) zugeleitet wird, wo es Aktivkohlefilter vom Restozon befreien, um schließlich als Reinwasser die Vorrichtung wieder zu verlassen, wobei
- das Restgas ebenfalls in die dritte Zone (**K3**) strömt, wo es durch Aktivkohlefilter ebenfalls vom Restozon befreit wird, um schließlich
- in der vierten Zone (**K4**) durch einen Zentrifugalabscheider oder einen Demister von mitgerissenen Wassertropen befreit zu werden, wonach
es über den Kolonnenkopf in die Atmosphäre abgeleitet wird.

13. Verfahren zur Trinkwasser-Desinfektion nach Anspruch 12 mittels einer Vorrichtung nach Anspruch 4 und einem der Ansprüche 5 bis 7, soweit diese auf Anspruch 4 rückbezogen sind, **dadurch gekennzeichnet, daß** zu Beginn des Verfahrens der Vorlage Behälter für die erste Zone (**B1**) mit Wasser und der Vorlage Behälter für die dritte Zone (**B3**) ebenfalls mit Wasser befüllt wird

14. Verfahren zur Abgas- und Abwasserreinigung mittels einer Vorrichtung nach einem der Ansprüche 1 bis 7, bei dem vermittels der Pumpen (**P1, P2, P3**) die Umwälzkreislaufe der ersten (**K1**), zweiten (**K2**) und der dritten Zone (**K3**) betrieben und vermittels des Strahlgasventilators (**VO1**) Abgas und Ozon angesaugt werden sowie Abwasser dem Umwälzkreislauf der ersten Zone (**K1**) zugeführt wird, wobei
- Abgas und Abwasser in der ersten Zone (**K1**) durch das Ozon chemisch behandelt werden, und das Abwasser, so gereinigt, die Vorrichtung wieder verläßt,
- das Abgas aber weiter in die zweite Zone (**K2**) strömt, wo es physikalisch-/chemisch gewaschen wird, wonach es
- als gereinigtes Abgas in die dritte Zone (**K3**) strömt, um dort durch Aktivkohlefilter vom Restozon befreit zu werden, um schließlich
- in der vierten Zone (**K4**) durch einen Zentrifugalabscheider oder einen Demister von mitgerissenen Wassertropen befreit zu werden, wonach
es über den Kolonnenkopf in die Atmosphäre abgeleitet wird.

15. Verfahren zur zur Abgas- und Abwasserreinigung nach Anspruch 14 mittels einer Vorrichtung nach Anspruch 4, soweit dieser auf Anspruch 3 rückbezogen ist und einem der Ansprüche 5 bis 7, soweit diese auf Anspruch 3 und Anspruch 4 rückbezogen sind, **dadurch gekennzeichnet, daß** zu Beginn des Verfahrens der Vorlage Behälter für die erste Zone (**B1**) mit Wasser und der Vorlage Behälter für die dritte Zone (**B3**) ebenfalls mit Wasser, der Vorlage Behälter für die zweite Zone (**K2**) aber mit Lauge befüllt wird

16. Verfahren nach einem der Ansprüche 8 bis 15 **dadurch gekennzeichnet, daß** während des Verfahrens entstehende Reaktionswärme über gekühlte Wärmetauscher (**W1, W2**) in dem jeweiligen Umwälzkreislauf einer Zone (**K1, K3**) abgeführt wird.

17. Verfahren nach einem der Ansprüche 8, 9, 14 oder 15, sowie 16, soweit dieser auf einen der Ansprüche 8, 9, 14 oder 15 rückbezogen ist, **dadurch gekennzeichnet, daß** zu reinigendes Abgas vor seienm Eintritt in die Vorrichtung vermittels eines Kühlers (**W3**), vorzugsweise eines gekühlten Wärmetauschers, gekühlt wird.

## Claims

1. Device for the combined physical/chemical purification of exhaust air and waste water and for the disinfection of potable water, with a column (**K**) having four zones (**K1, K2, K3, K4**) which are connected to one another and of which the three lower zones (**K1, K2, K3**) are operated in countercurrent by gas and washing liquid,
the first zone (**K1**) arranged lowermost serving for the oxidation of exhaust gas and/or water and, for this purpose, having
in each case an inlet for exhaust gas (**AL**) and ozone (**OZ**) and for waste water (**AW**) to be purified or untreated water (**RW**),
a jet-gas ventilator (**VO1**) for sucking in exhaust gas (**AL**) and/or ozone (**OZ**),
an outflow (**V1**) for purified waste water (**BAW**), and
a circulation circuit, operated by means of a first pump (**P1**) through the first zone (**K1**) and an associated reservoir (**B1**) for the reception of water,
the jet-gas ventilator (**VO1**) being driven by means of a liquid circulated in the circulation circuit of the first zone (**K1**),
and chemical treatment of the exhaust gas to be purified and/or of the waste water to be purified and/or of the untreated water to be disinfected thus being capable of taking place by means of ozone in the circulation circuit of the first zone (**K1**) of the column (**K**);
the second zone (**K2**), arranged above it, serving for washing the exhaust gas rising out of the first zone and, for this purpose, having a circulation circuit which is operated by means of a second pump (**P2**) and to which washing water or lye can be supplied;
the third zone (**K3**), arranged above the second zone, serving for destroying the residual ozone in the exhaust gas and/or in the water and for filtration and, for this purpose, having a activated-charcoal filter and an outflow (**V6**) for pure water and also a circulation circuit operated by means of a third pump (**P3**); and
the fourth zone (**K4**), arranged above the third zone, serving for the separation of water drops out of the exhaust gas and, for this purpose, having a centrifugal separator or a demister,
and a circuit connection valve (**V4**) being provided, in order to conduct liquid out of the circulation circuit of the first zone (**K1**) into the circulation circuit of the third zone (**K3**).

2. Device for the combined physical/chemical purification of exhaust gas and waste water and for the disinfection of potable water according to Claim 1, **characterized in that** the circulation circuit of the first zone (**K1**) also has a cooler for the first zone (**W1**).

3. Device for the combined physical/chemical purification of exhaust gas and waste water and for the disinfection of potable water according to Claim 1 or 2, **characterized in that** the circulation circuit of the second zone (**K2**) also has a reservoir for the second zone (**B2**) for the reception of lye, preferably for the reception of soda lye (NaOH).

4. Device for the combined physical/chemical purification of exhaust gas and waste water and for the disinfection of potable water according to one of Claims 1 to 3, **characterized in that** the circulation circuit of the third zone (**K3**) also has a reservoir for the third zone (**B3**) for the reception of water.

5. Device for the combined physical/chemical purification of exhaust gas and waste water and for the disinfection of potable water according to one of Claims 1 to 4, **characterized in that** the circulation circuit of the third zone (**K3**) also has a cooler, preferably a cooled heat exchanger, for the third zone (**W2**).

6. Device for the combined physical/chemical purification of exhaust gas and waste water and for the disinfection of potable water according to one of Claims 1 to 5, **characterized in that** the supply for exhaust gas to be purified also has a cooler, preferably a cooled heat exchanger, for the exhaust gas (**W3**).

7. Device for the combined physical/chemical purification of exhaust gas and waste water and for the disinfection of potable water according to one of Claims 1 to 6, **characterized in that** the drain for treated waste water and the drain for pure water and also the outlet for pure gas or exhaust gas and the outflow for washing water or lye have in each case an analytic station (**A1, A2, A3, A4**) for the analytical checking and setting of the plant zones (**KI, K2, K3, K4**) and for optimizing the ozone metering.

8. Method for the purification of exhaust gas by means of a device according to one of Claims 1 to 7, in which the circulation circuits of the first (**K1**), the second (**K2**) and the third (**K3**) zones are operated by means of the pumps (**P1, P2, P3**) and exhaust gas and ozone are sucked in by means of the jet-gas ventilator (**VO1**),
- the exhaust gas being treated chemically by the ozone in the first zone (**K1**), and then
- flowing further on into the second zone (**K2**) where it is washed physically/chemically, after which
- it flows as purified exhaust gas into the third zone (**K3**), in order to be freed there of residual ozone by means of activated-charcoal filters, in order finally
- to be freed in the fourth zone (**K4**) of entrained water drops by a centrifugal separator or a demister, after which
it is discharged into the atmosphere via the column head.

9. Method for the purification of exhaust gas according to Claim 8 by means of a device according to Claim 3 and according to one of Claims 4 to 7 insofar as these refer back to Claim 3, **characterized in that**, at the commencement of the method, the reservoir for the first zone (**B1**) is filled with water and the reservoir for the second zone (**B2**) is filled with lye.

10. Method for the purification of waste water by means of a device according to one of Claims 1 to 7, in which the circulation circuits of the first (**K1**) and of the third (**K3**) zones are operated by means of the pumps (**P1, P3**), waste water is supplied to the circulation circuit of the first zone (**K1**) and ozone is sucked in by means of the jet-gas ventilator (**VO1**),
- the waste water being treated chemically in the first zone (**K1**) by the ozone and, thus purified, leaving the device again, a residual gas occurring,
- the residual gas flowing into the third zone (**K3**) where it is freed of residual ozone by activated-charcoal filters, in order finally,
- to be freed in the fourth zone (**K4**) of entrained water drops by a centrifugal separator or a demister, after which
it is discharged into the atmosphere via the column head.

11. Method for the purification of waste water according to Claim 10 by means of a device according to Claim 4 and according to one of Claims 5 to 7 in so far as these refer back to Claim 4, **characterized in that**, at the commencement of the method, the reservoir for the first zone (**B1**) is filled with water and the reservoir for the third zone (**B3**) is likewise filled with water.

12. Method for the disinfection of potable water by means of a device according to one of Claims 1 to 7, in which the circulation circuits of the first (**K1**) and of the third (**K3**) zones are operated by means of the pumps (**P1, P3**), untreated water is supplied to the circulation circuit of the first zone (**K1**) and ozone is sucked in by means of the jet-gas ventilator (**VO1**),
- the untreated water being treated chemically in the first zone (**K1**) by the ozone and being disinfected, and a residual gas occurring, whereupon the untreated water
- is delivered via the circuit connection valve (**V4**) to the third zone (**K3**), where activated-charcoal filters free it of residual ozone, in order finally to leave the device again as pure water,
- the residual gas likewise flowing into the third zone (**K3**) where it is likewise freed of residual ozone by activated-charcoal filters, in order finally
- to be freed in the fourth zone (**K4**) of entrained water drops by a centrifugal separator or a demister, after which
it is discharged into the atmosphere via the column head.

13. Method for the disinfection of potable water according to Claim 12 by means of a device according to Claim 4 and according to one of Claims 5 to 7 in so far as these refer back to Claim 4, **characterized in that**, at the commencement of the method, the reservoir for the first zone (**B1**) is filled with water and the reservoir for the third zone (**B3**) is likewise filled with water.

14. Method for the purification of exhaust gas and waste water by means of a device according to one of Claims 1 to 7, in which the circulation circuits of the first (**K1**), the second (**K2**) and the third (**K3**) zones are operated by means of the pumps (**P1, P2, P3**) and exhaust gas and ozone are sucked in by means of the jet-gas ventilator (**VO1**) and also waste water is supplied to the circulation circuit of the first zone (**K1**),
- exhaust gas and waste water being treated chemically in the first zone (**K1**) by the ozone, and the waste water, thus purified, leaving the device again,
- the exhaust gas however, flowing further into the second zone (**K2**) where it is washed physically/chemically, after which
- it flows as purified exhaust gas into the third zone (**K3**), in order to be freed there of residual ozone by activated-charcoal filters, in order finally
- to be freed in the fourth zone (**K4**) of entrained water drops by a centrifugal separator or a demister, after which
it is discharged into the atmosphere via the column head.

15. Method for the purification of exhaust gas and waste water according to Claim 14 by means of a device according to Claim 4 in so far as this refers back to Claim 3 and according to one of Claims 5 to 7 in so far as these refer back to Claim 3 and Claim 4, **characterized in that**, at the commencement of the method, the reservoir for the first zone (**B1**) is filled with water and the reservoir for the third zone (**B3**) is likewise filled with water, but the reservoir for the second zone (**K2**) is filled with lye.

16. Method according to one of Claims 8 to 15, **characterized in that** reaction heat occurring during the method is dissipated via cooled heat exchangers (**W1, w2**) in the respective circulation circuit of a zone (**K1, K3**).

17. Method according to one of Claims 8,9, 14 or 15 and 16, in so far as the latter refers back to one of Claims 8, 9, 14 or 15, **characterized in that** exhaust gas to be purified, before it enters the device, is cooled by means of a cooler (**W3**), preferably a cooled heat exchanger.

## Revendications

1. Dispositif pour l'épuration physico-chimique combiné de gaz d'échappement et d'eau usée ainsi que pour la désinfection d'eau potable, avec une colonne (K) comportant quatre zones reliées l'une à l'autre (K1, K2, K3, K4) , dont les trois zones inférieures (K1, K2, K3) fonctionnent à contre-courant de gaz et de liquide de lavage, dans lequel
la première zone disposée le plus bas (K1) sert pour l'oxydation de gaz d'échappement et/ou d'eau et présente à cet effet
respectivement une entrée pour les gaz d'échappement (AL) et l'ozone (OZ) ainsi que pour l'eau usée à épurer (AW) ou l'eau brute (RW),
un ventilateur à jet de gaz (VO1) pour l'aspiration de gaz d'échappement (AL) et/ou d'ozone (OZ),
une évaluation (V1) pour l'eau usée épurée (BAW), et un circuit de recirculation à travers la première zone (K1) ainsi qu'un réservoir primaire correspondant (B1), activé au moyen d'une pompe (P1),
dans lequel le ventilateur à jet de gaz (VO1) est entraîné au moyen d'un liquide circulant dans le circuit de recirculation de la première zone (K1),
et il peut ainsi se produire, dans le circuit de recirculation de la première zone (K1) de la colonne (K), un traitement chimique des gaz d'échappement à épurer et/ou de l'eau usée à épurer et/ou de l'eau brute à désinfecter avec de l'ozone;
la deuxième zone (K2) disposée au-dessus de celle-ci sert pour le lavage des gaz d'échappement ascendants à partir de la première zone et présente à cet effet un circuit de recirculation activé au moyen d'une pompe (P2), auquel de l'eau de lavage ou une lessive peut être fournie;
la troisième zone (K3) disposée au-dessus de la deuxième zone sert pour la destruction de l'ozone résiduel dans les gaz d'échappement et/ou dans l'eau et pour le filtrage et présente à cet effet un filtre à charbon actif et une évacuation (V6) pour l'eau propre ainsi qu'un circuit de recirculation activé au moyen d'une troisième pompe (P3); et
la quatrième zone (K4) disposée au-dessus de la troisième zone, qui sert pour la séparation de gouttes d'eau hors des gaz d'échappement et présente à cet effet un séparateur centrifuge ou un dévésiculeur,
et il est prévu une soupape de liaison de circuits (V4), pour conduire du liquide du circuit de recirculation de la première zone (K1) dans le circuit de recirculation de la troisième zone (K3).

2. Dispositif pour l'épuration physico-chimique combinée de gaz d'échappement et d'eau usée ainsi que pour la désinfection d'eau potable selon la revendication 1, **caractérisé en ce que** le circuit de recirculation de la première zone (K1) présente aussi un refroidisseur pour la première zone (W1).

3. Dispositif pour l'épuration physico-chimique combinée de gaz d'échappement et d'eau usée ainsi que pour la désinfection d'eau potable selon la revendication 1 ou 2, **caractérisé en ce que** le circuit de recirculation de la deuxième zone (K2) présente également un réservoir primaire pour la deuxième zone (B2) destiné à contenir une lessive, de préférence une lessive sodique (NaOH).

4. Dispositif pour l'épuration physico-chimique combinée de gaz d'échappement et d'eau usée ainsi que pour la désinfection d'eau potable selon l'une quelconque des revendications 1 à 3, **caractérisé en ce que** le circuit de recirculation de la troisième zone (K3) présente aussi un réservoir primaire pour la troisième zone (B3), destiné à contenir de l'eau.

5. Dispositif pour l'épuration physico-chimique combinée de gaz d'échappement et d'eau usée ainsi que pour la désinfection d'eau potable selon l'une quelconque des revendications 1 à 4, **caractérisé en ce que** le circuit de recirculation de la troisième zone (K3) comporte aussi un refroidisseur, de préférence un échangeur de chaleur refroidi, pour la troisième zone (W2).

6. Dispositif pour l'épuration physico-chimique combinée de gaz d'échappement et d'eau usée ainsi que pour la désinfection d'eau potable selon l'une quelconque des revendications 1 à 5, **caractérisé en ce que** l'arrivée pour les gaz d'échappement à épurer comporte aussi un refroidisseur, de préférence un échangeur de chaleur refroidi, pour les gaz d'échappement (W3).

7. Dispositif pour l'épuration physico-chimique combinée de gaz d'échappement et d'eau usée ainsi que pour la désinfection d'eau potable selon l'une quelconque des revendications 1 à 6, **caractérisé en ce que** l'évacuation pour l'eau usée traitée et l'évacuation pour l'eau propre ainsi que l'évacuation pour le gaz propre ou les gaz d'échappement et la décharge pour l'eau de lavage ou la lessive comportent chaque fois un point d'analyse (A1, A2, A3, A4) pour le contrôle analytique et le réglage des zones de l'installation (K1, K2, K3, K4) et pour l'optimisation du dosage de l'ozone.

8. Procédé pour l'épuration de gaz d'échappement au moyen d'un dispositif selon l'une quelconque des revendications 1 à 7, dans lequel on active les circuits de recirculation de la première zone (K1), de la deuxième zone (K2) et de la troisième zone (K3) au moyen des pompes (P1, P2, P3) et on aspire des gaz d'échappement et de l'ozone au moyen du ventilateur à jet de gaz (VO1), dans lequel
- on traite chimiquement les gaz d'échappement dans la première zone (K1) au moyen de l'ozone, et ensuite
- on les transfère dans la deuxième zone (K2), où on les lave physiquement/chimiquement, puis
- on les transfère en tant que gaz d'échappement épurés dans la troisième zone (K3), afin qu'ils y soient débarrassés de l'ozone résiduel au moyen d'un filtre à charbon actif, pour finalement
- les débarrasser, dans la quatrième zone (K4), des gouttes d'eau entraînées au moyen d'un séparateur centrifuge ou d'un dévésiculeur, puis
on les rejette à l'atmosphère par la tête de la colonne.

9. Procédé pour l'épuration de gaz d'échappement selon la revendication 8 au moyen d'un dispositif selon la revendication 3, et l'une quelconque des revendications 4 à 7, dans la mesure où celles-ci sont reliées à la revendication 3, **caractérisé en ce qu'**au début du procédé, on remplit le réservoir primaire pour la première zone (B1) avec de l'eau et le réservoir primaire pour la deuxième zone (B2) avec une lessive.

10. Procédé pour l'épuration d'eau usée au moyen d'un dispositif selon l'une quelconque des revendications 1 à 7, dans lequel on active les circuits de recirculation de la première zone (K1) et de la troisième zone (K3) au moyen des pompes (P1, P3), on envoie de l'eau usée au circuit de recirculation de la première zone (K1) et on aspire de l'ozone au moyen du ventilateur à jet de gaz (VO1), dans lequel
- on traite chimiquement l'eau usée dans la première zone (K1) au moyen de l'ozone, et elle quitte ainsi de nouveau le dispositif en étant épurée, dans lequel il apparaît un gaz résiduel,
- on transfère le gaz résiduel dans la troisième zone (K3), où on le débarrasse de l'ozone résiduel au moyen d'un filtre à charbon actif, pour finalement
- le débarrasser, dans la quatrième zone (K4), des gouttes d'eau entraînées au moyen d'un séparateur centrifuge ou d'un dévésiculeur, puis
on le rejette à l'atmosphère par la tête de la colonne.

11. Procédé pour l'épuration d'eau usée selon la revendication 10 au moyen d'un dispositif selon la revendication 4 et l'une quelconque des revendications 5 à 7, dans la mesure où celles-ci sont reliées à la revendication 4, **caractérisé en ce qu'**au début du procédé, on remplit le réservoir primaire pour la première zone (B1) avec de l'eau et le réservoir primaire pour la troisième zone (B3) également avec de l'eau.

12. Procédé pour la désinfection d'eau potable au moyen d'un dispositif selon l'une quelconque des revendications 1 à 7, dans lequel on active les circuits de recirculation de la première zone (K1) et de la troisième zone (K3) au moyen des pompes (P1, P3), on envoie de l'eau brute au circuit de recirculation de la première zone (K1) et on aspire de l'ozone au moyen du ventilateur à jet de gaz (VO1), dans lequel
- on traite chimiquement et on désinfecte l'eau brute dans la première zone (K1) au moyen de l'ozone, dans lequel il apparaît un gaz résiduel, puis
- on transfère l'eau brute par la soupape de liaison de circuits (V4) à la troisième zone (K3), où on la débarrasse de l'ozone résiduel au moyen d'un filtre à charbon actif, pour qu'elle quitte de nouveau finalement le dispositif en tant qu'eau propre, dans lequel
- on transfère également le gaz résiduel dans la troisième zone (K3), où on le débarrasse également de l'ozone résiduel au moyen d'un filtre à charbon actif, pour finalement
- le débarrasser, dans la quatrième zone (K4), des gouttes d'eau entraînées au moyen d'un séparateur centrifuge ou d'un dévésiculeur, puis
on le rejette à l'atmosphère par la tête de la colonne.

13. Procédé pour la désinfection d'eau potable selon la revendication 12 au moyen d'un dispositif selon la revendication 4 et l'une quelconque des revendications 5 à 7, dans la mesure où celles-ci sont reliées à la revendication 4, **caractérisé en ce qu'**au début du procédé, on remplit le réservoir primaire pour la première zone (B1) avec de l'eau et le réservoir primaire pour la troisième zone (B3) également avec de l'eau.

14. Procédé pour l'épuration de gaz d'échappement et l'épuration d'eau usée au moyen d'un dispositif selon l'une quelconque des revendications 1 à 7, dans lequel on active les circuits de recirculation de la première zone (K1), de la deuxième zone (K2) et de la troisième zone (K3) au moyen des pompes (P1, P2, P3) et on aspire des gaz d'échappement et de l'ozone au moyen du ventilateur à jet de gaz (VO1) et on envoie aussi de l'eau usée au circuit de recirculation de la première zone (K1), dans lequel
- on traite chimiquement les gaz d'échappement et l'eau usée dans la première zone (K1) au moyen de l'ozone, et l'eau usée, ainsi épurée, quitte de nouveau le dispositif,
- on transfère cependant les gaz d'échappement dans la deuxième zone (K2), où on les lave physiquement/- chimiquement, puis
- on les transfère en tant que gaz d'échappement épurés dans la troisième zone (K3), pour y être débarrassés de l'ozone résiduel au moyen d'un filtre à charbon actif, pour finalement
- les débarrasser, dans la quatrième zone (K4), des gouttes d'eau entraînées au moyen d'un séparateur centrifuge ou d'un dévésiculeur, puis
on les rejette à l'atmosphère par la tête de la colonne.

15. Procédé pour l'épuration de gaz d'échappement et d'eau usée selon la revendication 14 au moyen d'un dispositif selon la revendication 4, dans la mesure où celle-ci est reliée à la revendication 3, et selon l'une quelconque des revendications 5 à 7, dans la mesure où celles-ci sont reliées à la revendication 3 et à la revendication 4, **caractérisé en ce qu'**au début du procédé, on remplit le réservoir primaire pour la première zone (B1) avec de l'eau et le réservoir primaire pour la troisième zone (B3) également avec de l'eau, le réservoir primaire pour la deuxième zone (K2) étant cependant rempli avec de la lessive.

16. Procédé selon l'une quelconque des revendications 8 à 15, **caractérisé en ce que** l'on évacue la chaleur de réaction dégagée pendant le procédé au moyen d'échangeurs de chaleur refroidis (W1, W2) dans le circuit de recirculation respectif d'une zone (K1, K3).

17. Procédé selon l'une quelconque des revendications 8, 9, 14 ou 15, ainsi que 16, dans la mesure où celle-ci est reliée à l'une quelconque des revendications 8, 9, 14, ou 15, **caractérisé en ce que** l'on refroidit des gaz d'échappement à épurer, avant leur entrée dans le dispositif, au moyen d'un refroidisseur (W3), de préférence un échangeur de chaleur refroidi.
